# EUROPEAN PATENT SPECIFICATION

(11) **EP 1 881 668 B1**
(45) Date of publication and mention of the grant of the patent: **28.10.2009**
(21) Application number: 06840586.9
(22) Date of filing: 19.12.2006
(51) Int. Cl.: H04L 29/06

(54) **THE METHOD, SYSTEM AND APPARATUS FOR TRANSFERRING SYSLOG MESSAGE**
VERFAHREN, SYSTEM UND GERÄT ZUR ÜBERTRAGUNG EINER SYSLOG-NACHRICHT
PROCÉDÉ, SYSTÈME ET APPAREIL DE TRANSFERT DE MESSAGE SYSLOG

(30) Priority: 19.04.2006 CN 200610076225
(43) Date of publication of application: 23.01.2008
(73) Proprietor: Huawei Technologies Co., Ltd., Longgang District, Shenzhen Guangdong 518129 (CN)
(72) Inventor: MIAO, Fuyou, Guangdong 518129 (CN)
(74) Representative: Manitz, Finsterwald & Partner GbR
(86) International application number: PCT/CN2006/003480
(87) International publication number: WO 2007/118381

(56) References cited:
- WO-A1-01/01644
- WO-A2-02/17587
- US-A1- 2003 225 883
- US-B1- 6 708 200
- US-B1- 6 708 200
- MIAO M YUZHI HUAWEI TECHNOLOGIES F: "TLS Transport Mapping for SYSLOG; draft-ietf-syslog-transport-tls-01.txt" IETF STANDARD-WORKING-DRAFT, INTERNET ENGINEERING TASK FORCE, IETF, CH, vol. syslog, no. 1, 18 April 2006 (2006-04-18), XP015045956 ISSN: 0000-0004

## Description

### Field of the Invention

The present invention relates to communication technologies, and particularly to a method, a system and an apparatus for transmitting SYSLOG messages.

### Background of the Invention

SYSLOG protocol is an event notification transferring protocol widely adopted in a variety of network operation systems. Existing popular operation systems, such as Microsoft Windows system, different kinds of UNIX systems and Linux systems have implemented the SYSLOG protocol.

The SYSLOG protocol adopts a Client / Server mode in communications. A Client is the sender of event messages, and a Server is the receiver of the event messages. The Client may be an event generator, e.g. a device or a process; the client may also be a relay entity which processes a SYSLOG message from a sender (an event generator or another relay entity) and transmits the SYSLOG message to a receiver.

The SYSLOG protocol provides a unidirectional communication, i.e. the event messages are transmitted from the sender to the receiver, whereas the receiver does not return to the sender any messages, such as a confirmation message, a connection initiation message, or a connection close message, on the SYSLOG protocol layer.

The SYSLOG protocol is a text-based protocol. According to the SYSLOG protocol, all parameter names and parameter values are in the form of text, and characters whose code values are lower than 32 in ASCII code are avoided, i.e. control characters are avoided. Therefore, a SYSLOG message may be simply regarded as a text block from the view of transmission protocols of lower layers.

The format of a SYSLOG message is described as follows.
1) A SYSLOG message includes a header, structured data and a message (MSG).
2) The header includes a string composed of print characters, and the print characters include the following fields separated by spaces:
   PRI, a priority level;
   VERSION, a version number of the SYSLOG protocol;
   TIMESTAMP, a time stamp;
   HOSTNAME, a name of a host;
   APP-NAME, a name of an application;
   PROCID, an ID of a process; and
   MSGID, an ID of the message.
3) The structured data consists of a series of structured elements, each of which includes a structured element name and multiple parameter name/value pairs.
4) The MSG is a message consisting of print characters, usually used for describing an event.

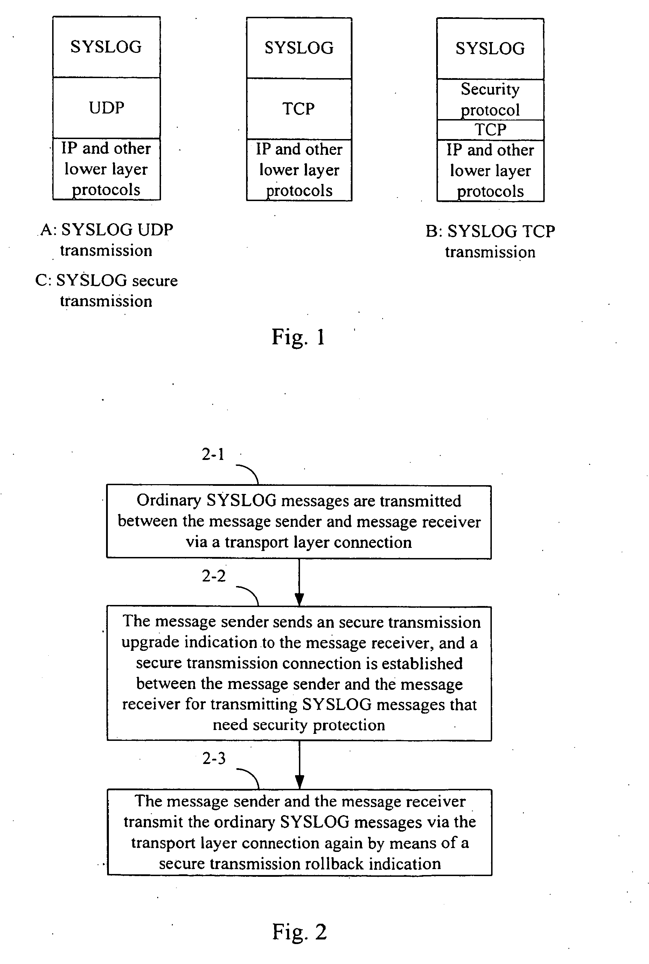

User Datagram Protocol (UDP) is usually used for transmitting SYSLOG messages. According to the relation between the length of the SYSLOG message and the length of the UDP message, the UDP message may carry only one SYSLOG message while transmitting the SYSLOG message using UDP. Part A of Figure 1 illustrates the protocol hierarchy in the protocol stack structure of the SYSLOG protocol when UDP is adopted for transmitting the SYSLOG message.

Despite of its simplicity and flexibility, UDP is an unreliable connectionless protocol. Packet loss may occur during the transmission process of the SYSLOG packet with UDP adopted, and SYSLOG does not deal with the packet loss; therefore, the adoption of UDP to transmit the SYSLOG message may cause event information loss in the transmission. Transfer control protocol (TCP) is a reliable connection-oriented protocol and can be adopted for transmitting the SYSLOG message to improve the reliability of data transmission. Part B of Figure 1 illustrates the protocol hierarchy in the protocol stack structure of the SYSLOG protocol when TCP is adopted for transmitting the SYSLOG message.

Internet security is more and more crucial to the steady operation of the network at present; similarly, the SYSLOG protocol also faces the following security problems:
1) Information Falsification
   The SYSLOG message is falsified by a malice network node during the transmission;
2) Information Leakage
   The SYSLOG message is intercepted illegally during the transmission, and information in the SYSLOG message, e.g. the description information of an event, is leaked;
3) Identity Counterfeiting
   A malice node imitates a legal node to join the SYSLOG communication.

Therefore, for the security of the SYSLOG message, the SYSLOG message may be transmitted over some security protocols, e.g. the Transport Layer Security (TLS) protocol, the Blocks Extensible Exchange Protocol (BEEP) and the Secure Shell (SSH) protocol, which provide security protection mechanisms including confidentiality, integrity and data source verification so that the security of the SYSLOG message can be ensured. Part C of Figure 1 illustrates the protocol hierarchy in the protocol stack structure of the SYSLOG protocol when TCP and a security protocol is adopted for transmitting the SYSLOG message.

Many devices and log servers have implemented the TCP-based transmission and the secure transmission at present. According to a method for transmitting the SYSLOG message with TLS in the prior art, a TLS transmission mode is configured to be a default mode. When a SYSLOG request is initiated to a specific TCP port, it is deemed that all the SYSLOG messages on the TCP connection need TLS protection. Therefore, TLS handshake process is directly launched after the TCP connection is established, and the SYSLOG messages are transmitted over the TLS protocol after the handshake process is completed. All SYSLOG messages on the TCP connection are transmitted with TLS until the communication is terminated.

The above-mentioned method is disadvantageous in that in practical applications, some devices or log servers expect to transmit only a specific group of the SYSLOG messages, instead of all SYSLOG messages, with security protocols, and transmit the other SYSLOG messages with the TCP connection without security protocol after a specific group of the SSYSLOG messages are transmitted.

According to another method in the prior art, TCP and TLS alternate to transmit the SYSLOG message transmission, and a step of re-establishing connections is adopted. The process includes:
1) establishing a TCP connection for transmitting SYSLOG message;
2) closing the TCP connection when private SYSLOG messages need to be transmitted, and establishing a TCP / TLS connection for transmitting the private SYSLOG messages;
3) closing the TCP / TLS connection after completing the transmission of the private SYSLOG messages, and establishing a new TCP connection to continue transmitting the ordinary SYSLOG message.

The above-mentioned method is disadvantageous in that multiple establishments and closures of connections waste system resources.

"TLS transport Mapping for SYSLOG draft-ietf-syslog-transport-tls-01. txt" (MIAO M YUZHI HUA WEI TECHNOLOGIES) discloses the security threats to Syslog and counter measures of using TLS protocol for such threats. Different phases are defined for using TLS to secure Syslog.

### Summary of the Invention

A method for transmitting SYSLOG messages, includes:
transmitting SYSLOG messages from a SYSLOG message sender to a SYSLOG message receiver via a transport layer connection:
transmitting a secure transmission upgrade indication from the SYSLOG message sender to the SYSLOG message receiver when SYSLOG messages that need security protection are to be transmitted and the transport layer connection is currently utilized:
establishing a secure transmission connection on the transport layer connection currently utilized between the SYSLOG message sender and the SYSLOG message receiver to transmit the SYSLOG messages that need security protection without closing the transport layer connection: and
transmitting the SYSLOG messages that need security protection from the SYSLOG message sender to the SYSLOG message receiver via the secure transmission connection.

An apparatus for transmitting SYSLOG messages, includes:
an upgrade indication transmission module configured to transmit a secure transmission upgrade indication when SYSLOG messages that need security protection are to be transmitted and a transport layer connection is currently utilized; and
a SYSLOG message secure transmission module configured to establish a secure transmission connection without closing the transport layer connection on the transport layer connection currently utilized after the upgrade indication transmission module has sent the secure transmission upgrade indication, and transmit the SYSLOG messages that need security protection via the secure transmission connection.

An apparatus for receiving SYSLOG messages, includes:
an upgrade indication receiving module, configured to receive a secure transmission upgrade indication when SYSLOG messages that need security protection are to be transmitted and a transport layer connection is currently utilized; and
a SYSLOG message secure deceiving module configured to establish a secure transmission connection without closing the transport layer connection after the upgrade information receiving module has received the secure transmission indication and receive SYSLOG messages that need security protection via the secure transmission connection.

### Brief Description of the Drawings

Figure 1 is a schematic diagram illustrating a protocol stack structure of the SYSLOG protocol;
Figure 2 is a flowchart illustrating the method according to an embodiment of the present invention;
Figure 3 is a schematic diagram illustrating a protocol stack structure in the TCP / TLS upgrade and rollback process according to an embodiment of the present invention;
Figure 4 is a schematic diagram illustrating a structure of the system according to an embodiment of the present invention.

### Detailed Description of the Invention

Embodiments of the present invention are described as follows in detail with ref erence to the accompanying drawings. As shown in Figure 2, the work flow of the method in accordance with an embodiment of the present invention includes:
Block 2-1: Ordinary SYSLOG messages are transmitted between the message sender and message receiver via a transport layer connection.
   First a transport layer connection, e.g. a TCP connection is established between the message sender and the message receiver. The ordinary SYSLOG messages that need not protection can be transmitted between the message sender and the message receiver via the TCP connection; in other words, the ordinary SYSLOG messages are transmitted directly with TCP.
Block 2-2: The message sender transmits a secure transmission upgrade indication to the message receiver, and a secure transmission connection is established between the message sender and the message receiver to transmit the SYSLOG messages that need security protection.
   When private SYSLOG messages that need security protection are to be transmitted between the message sender and the message receiver, the message sender transmits a secure transmission upgrade indication, which may be carried in a secure transmission upgrade message, to the message receiver.

The secure transmission upgrade message may adopt either of the following formats.
1) A special application layer message
   The special application layer message is not consistent with the SYSLOG message in format, but it carries an upgrade indication.
2) A special SYSLOG message
   The special SYSLOG message is consistent with the SYSLOG message in format, but it has a specified field used for containing the upgrade indication so that the message receiver performs upgrade upon receiving the special SYSLOG message.
   For example, some irregular values may be set in the header of the special SYSLOG message. For instance, an irregular value in the PRI field may be set to serve as the upgrade indication, so that the message receiver performs upgrade when having detected that the PRI field of the received SYSLOG message contains the irregular value.
3) A special SYSLOG message
   The special SYSLOG message contains some predetermined structured data element in the structured data section; and the upgrade indication is carried in the identity of the structured data element or in the parameter name / value pair of the predetermined structured data element. The message receiver performs upgrade when having detected that the structured data of the received SYSLOG message contains the identity or the parameter name / value pair;
4) An ordinary SYSLOG message
   The ordinary SYSLOG message, while transmitting ordinary event information, contains some predetermined structured data element in the structured data section; and the upgrade indication is carried in the identity of the structured data element or in the parameter name / value pair of the predetermined structured data element. The message receiver performs upgrade when having detected that the structured data of the received SYSLOG message contains the identity or the parameter name / value pair.

Upon receiving the secure transmission upgrade message, the message receiver establishes with the message sender a secure transmission connection, e.g. a TLS connection, on the transport layer connection currently utilized. Meanwhile, the message sender does not close the established TCP connection, but initiates a TLS handshake process with the message receiver over the TCP connection, and a TLS connection over the TCP connection is established between the message sender and the message receiver after the TLS handshake process is completed. If there is an existing TLS connection between the message sender and the message receiver, the TLS handshake process is omitted.

The TLS protocol is a security protocol over secure transmission connection and offers security services including verification, integrity check, data confidentiality and anti-playback, etc. The TLS protocol is widely adopted in network accesses. However, other security protocols may also be adopted, such as the BEEP protocol or the SSH protocol.

After the establishment of the TLS connection, the following private SYSLOG messages that need security protection are transmitted via the TLS connection. The established TCP connection is not closed when the TLS connection is used for transmitting SYSLOG messages.

Block 2-3: By transmitting a secure transmission rollback indication, the message sender and receiver use the transport layer connection again to transmit the ordinary SYSLOG messages.

After the private SYSLOG messages that need security protection are transmitted, the message sender transmits a rollback indication, which may be carried in a secure transmission rollback message, to the message receiver.

In correspondence with the secure transmission upgrade message, the secure transmission rollback message may adopt either of the following formats.
1) A special application layer message
   The special application layer message is not consistent with the SYSLOG message in format, but it carries a rollback indication. The message receiver performs rollback upon receiving the special application layer message;
2) A special SYSLOG message
   The special SYSLOG message is consistent with the SYSLOG message in format, but it has a specified field indicating that the special SYSLOG message serves as the security transmission rollback message.
   For example, some irregular values may be set in the header of the special SYSLOG message. For instance, an irregular value in the PRI (priority) field may be set to serve as the rollback indication, so that the message receiver performs rollback when having detected that the PRI field of the received SYSLOG message contains the irregular value;
3) A special SYSLOG message
   The special SYSLOG message contains some predetermined structured data element in the structured data section; and the rollback indication is carried in the identity of the structured data element or in the parameter name / value pair of the predetermined structured data element. The message receiver performs rollback when having detected that the structured data of the received SYSLOG message contains the identity or the parameter name / value pair;
4) An ordinary SYSLOG message
   The ordinary SYSLOG message, while transmitting ordinary event information, contains some predetermined structured data element in the structured data section; and the rollback indication is carried in the identity of the structured data element or in the parameter name / value pair of the predetermined structured data element. The message receiver performs rollback when having detected that the structured data of the received SYSLOG message contains the identity or the parameter name / value pair.

When the message sender has transmitted the secure transmission rollback message, the following SYSLOG messages continue to be transmitted over the TCP connection, and the TLS connection may or may not be closed on demand.

If the secure transmission connection between the message sender and the message receiver is not closed, when the message sender transmits another secure transmission upgrade indication to the message receiver, the message sender will use the secure transmission connection again to transmit SYSLOG messages to the message receiver.

If the secure transmission connection between the message sender and the message receiver is closed, when the message sender transmits another secure transmission indication to the message receiver, the message sender and the message receiver establish a new secure transmission connection on the transport layer connection currently utilized, and the message sender will use the new secure transmission connection to transmit SYSLOG messages to the message receiver.

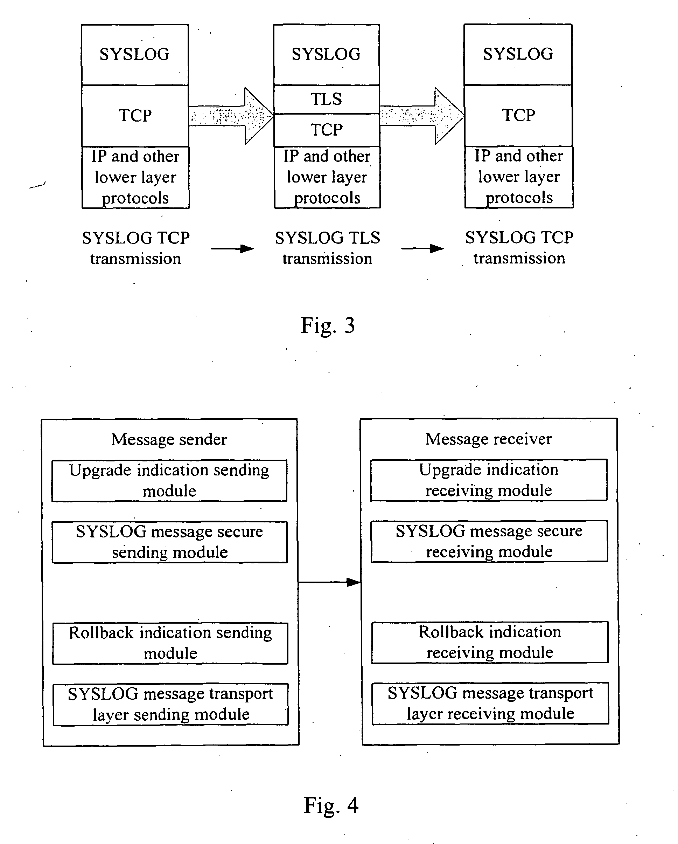

Figure 3 shows the protocol stack structure in the TCP / TLS upgrade and rollback process.

As shown in Figure 3, the message sender and the message receiver first transmit SYSLOG messages via the TCP connection; after the upgrade from the TCP connection to the TLS connection, the message sender and the message receiver transmit SYSLOG messages via the TLS connection without closing the TCP connection formerly established between the message sender and the message receiver; after the rollback from TLS connection to the TCP connection, the message sender and the message receiver continue with transmitting the SYSLOG messages over the TCP connection formerly established while the TLS connection is closed or maintained on demand.

Figure 4 shows the structure of the system for transmitting SYSLOG messages according to an embodiment of the present invention. The system includes a message sender and a message receiver.

The message sender is configured to transmit a secure transmission upgrade indication to the message receiver, establish with the message receiver a secure transmission connection (e.g. TLS connection) on the transport layer connection (e.g. TCP connection) currently utilized, and transmits SYSLOG messages via the secure transmission connection to the message receiver. The message sender includes: an upgrade indication transmission module, a SYSLOG message secure transmission module, a rollback indication transmission module and a SYSLOG message transport layer transmission module.

The upgrade indication transmission module is configured to transmit a secure transmission upgrade indication from the message sender to the message receiver when private SYSLOG messages that need security protection are to be transmitted between the message sender and the message receiver, wherein the secure transmission upgrade indication is carried in a secure transmission upgrade message, such as an application layer message or a SYSLOG message.

The SYSLOG message secure transmission module is configured to establish together with the message receiver the secure transmission connection on the transport layer connection currently utilized between the message sender and the message receiver without closing the transport layer connection after the upgrade indication transmission module has sent the secure transmission indication to the message receiver, and transmit SYSLOG messages to the message receiver via the secure transmission connection.

The rollback indication transmission module is configured to transmit a secure transmission rollback indication from the message sender to the message receiver when ordinary SYSLOG messages that need not security protection are to be transmitted between the message sender and the message receiver, wherein the secure transmission rollback indication is carried in a secure transmission rollback message, such as an application layer message or a SYSLOG message.

The SYSLOG message transport layer transmission module is configured to transmit SYSLOG messages to the message receiver via the transport layer connection after the rollback indication transmission module has sent the secure transmission rollback indication to the message receiver. The SYSLOG message transport layer transmission module may be further configured to close the established secure transmission connection on demand.

The message receiver is configured to establish together with the message sender the secure transmission connection on the transport layer currently utilized after receiving the secure transmission indication from the message sender, and receive SYSLOG messages via the secure transmission connection from the message sender. The message receiver includes: an upgrade indication receiving module, a SYSLOG message secure receiving module, a rollback indication receiving module and a SYSLOG message transport layer receiving module.

The upgrade indication receiving module is configured to receive the secure transmission upgrade indication from the message sender.

The SYSLOG message secure receiving module is configured to establish together with the message sender the secure transmission connection on the transport layer connection currently utilized between the message sender and the message receiver without closing the transport layer connection after the upgrade information receiving module has received the secure transmission indication, and receive SYSLOG messages from the message sender via the secure transmission connection.

The rollback indication receiving module is configured to receive the secure transmission rollback indication from the message sender.

The SYSLOG message transport layer receiving module is configured to receive SYSLOG messages from the message sender via the transport layer connection after the rollback information receiving module has received the secure transmission rollback indication. The SYSLOG message transport layer receiving module may be further configured to close the established secure transmission connection on demand.

The apparatus for transmitting SYSLOG messages according to the embodiment of the present invention includes the message sender and the message receiver.

The above are only preferred embodiments of this invention. The protection scope of this invention, however, is not limited to the above description. Any modification or substitution, within the technical scope disclosed by this invention, easily occurring to those skilled in the art should be covered by the protection scope of this invention. Therefore, the protection scope of the present invention should be determined according to claims.

## Claims

1. A method for transmitting SYSLOG messages, comprising:
transmitting SYSLOG messages from a SYSLOG message sender to a SYSLOG message receiver via a transport layer connection; and
**characterized in that**
the method further comprises:
transmitting a secure transmission upgrade indication from the SYSLOG message sender to the SYSLOG message receiver when SYSLOG messages that need security protection are to be transmitted and the transport layer connection is currently utilized;
establishing a secure transmission connection on the transport layer connection currently utilized between the SYSLOG message sender and the SYSLOG message receiver to transmit the SYSLOG messages that need security protection without closing the transport layer connection; and
transmitting the SYSLOG messages that need security protection from the SYSLOG message sender to the SYSLOG message receiver via the secure transmission connection.

2. The method of Claim 1, further comprising:
transmitting a secure transmission rollback indication from the SYSLOG message sender to the SYSLOG message receiver; and
transmitting SYSLOG messages from the SYSLOG message sender to the message receiver via the transport layer connection again.

3. The method of Claim 2, further comprising:
maintaining the secure transmission connection between the SYSLOG message sender and the SYSLOG message receiver; and
transmitting SYSLOG messages that need security protection from the SYSLOG message sender to the SYSLOG message receiver via the secure transmission connection when another secure transmission upgrade indication is sent from the SYSLOG message sender to the SYSLOG message receiver.

4. The method of Claim 2, further comprising:
closing the secure transmission connection between the SYSLOG message sender and the SYSLOG message receiver;
establishing a new secure transmission connection on the transport layer connection currently utilized when another secure transmission up-grade indication is sent from the SYSLOG message sender to the SYSLOG message receiver; and
transmitting SYSLOG messages that need security protection from the SYSLOG message sender to the SYSLOG message receiver via the new secure transmission connection.

5. An apparatus for transmitting SYSLOG messages, **characterized in that**: the apparatus comprises:
an upgrade indication transmission module, configured to transmit a secure transmission upgrade indication when SYSLOG messages that need security protection are to be transmitted and a transport layer connection is currently utilized; and
a SYSLOG message secure transmission module, configured to establish a secure transmission connection without closing the transport layer connection on the transport layer connection currently utilized after the upgrade indication transmission module has sent the secure transmission upgrade indication, and transmit the SYSLOG messages that need security protection via the secure transmission connection.

6. The apparatus of Claim 5, further comprising:
a rollback indication transmission module, configured to transmit a secure transmission rollback indication; and
a SYSLOG message transport layer transmission module, configured to transmit the SYSLOG messages via the transport layer connection after the rollback indication transmission module has sent the secure transmission rollback indication.

7. An apparatus for receiving SYSLOG messages, **characterized in that**: the apparatus comprises:
an upgrade indication receiving module, configured to receive a secure transmission upgrade indication when SYSLOG messages that need security protection are to be transmitted and a transport layer connection is currently utilized; and
a SYSLOG message secure receiving module, configured to establish a secure transmission connection without closing the transport layer connection after the upgrade information receiving module has received the secure transmission indication, and receive SYSLOG messages that need security protection via the secure transmission connection.

8. The apparatus of Claim 7, further comprising:
a rollback indication receiving module, configured to receive a secure transmission rollback indication; and
a SYSLOG message transport layer receiving module, configured to receive the SYSLOG messages via the transport layer connection after the rollback indication receiving module has received the secure transmission rollback indication.

9. A system for transmitting SYSLOG messages using an apparatus claimed in claim 5 or 6.

10. The system of claim 9, further comprising:
an apparatus claimed in claim 7 or 8.

11. A system for transmitting SYSLOG messages using an apparatus claimed in claim 7 or 8.

## Patentansprüche

1. Verfahren zum Übertragen von SYSLOG-Nachrichten, das umfasst, dass:
SYSLOG-Nachrichten von einem SYSLOG-Nachrichtensender über eine Transportschichtverbindung an einen SYSLOG-Nachrichtenempfänger übertragen werden; und
**dadurch gekennzeichnet, dass** das Verfahren umfasst, dass:
ein Erweiterungshinweis einer sicheren Übertragung von dem SYSLOG-Nachrichtensender an den SYSLOG-Nachrichtenempfänger übertragen wird, wenn SYSLOG-Nachrichten, die einen Sicherheitsschutz benötigen, zu übertragen sind und die Transportschichtverbindung momentan verwendet wird;
eine Verbindung einer sicheren Übertragung an der momentan verwendeten Transportschichtverbindung zwischen dem SYSLOG-Nachrichtensender und dem SYSLOG-Nachrichtenempfänger hergestellt wird, um die SYSLOG-Nachrichten zu übertragen, die einen Sicherheitsschutz benötigen, ohne die Transportschichtverbindung zu schließen; und
die SYSLOG-Nachrichten, die einen Sicherheitsschutz benötigen, von dem SYSLOG-Nachrichtensender über die Verbindung einer sicheren Übertragung an den SYSLOG-Nachrichtenempfänger übertragen werden.

2. Verfahren nach Anspruch 1, das ferner umfasst, dass:
ein Wiederherstellungshinweis einer sicheren Übertragung von dem SYSLOG-Nachrichtensender an den SYSLOG-Nachrichtenempfänger übertragen wird; und
wieder SYSLOG-Nachrichten von dem SYSLOG-Nachrichtensender über die Transportschichtverbindung an den Nachrichtenempfänger übertragen werden.

3. Verfahren nach Anspruch 2, das ferner umfasst, dass:
die Verbindung einer sicheren Übertragung zwischen dem SYSLOG-Nachrichtensender und dem SYSLOG-Nachrichtenempfänger auf recht erhalten wird; und
SYSLOG-Nachrichten, die einen Sicherheitsschutz benötigen, von dem SYSLOG-Nachrichtensender über die Verbindung einer sicheren Übertragung an den SYSLOG-Nachrichtenempfänger übertragen werden, wenn ein weiterer Erweiterungshinweis einer sicheren Übertragung von dem SYSLOG-Nachrichtensender an den SYSLOG-Nachrichtenempfänger gesendet wird.

4. Verfahren nach Anspruch 2, das ferner umfasst, dass:
die Verbindung einer sicheren Übertragung zwischen dem SYSLOG-Nachrichtensender und dem SYSLOG-Nachrichtenempfänger geschlossen wird;
eine neue Verbindung einer sicheren Übertragung an der momentan verwendeten Transportschichtverbindung hergestellt wird, wenn ein weiterer Erweiterungshinweis einer sicheren Übertragung von dem SYSLOG-Nachrichtensender an den SYSLOG-Nachrichtenempfänger gesendet wird; und
SYSLOG-Nachrichten, die einen Sicherheitsschutz benötigen, von dem SYSLOG-Nachrichtensender über die neue Verbindung einer sicheren Übertragung an den SYSLOG-Nachrichtenempfänger übertragen werden.

5. Vorrichtung zum Übertragen von SYSLOG-Nachrichten, **dadurch gekennzeichnet, dass** die Vorrichtung umfasst:
ein Erweiterungshinweis-Übertragungsmodul, das ausgestaltet ist, um einen Erweiterungshinweis einer sicheren Übertragung zu übertragen, wenn SYSLOG-Nachrichten, die einen Sicherheitsschutz benötigen, zu übertragen sind und momentan eine Transportschichtverbindung verwendet wird; und
ein SYSLOG-Nachrichten-Sicherheitsübertragungsmodul, das ausgestaltet ist, um eine Verbindung einer sicheren Übertragung ohne Schließen der Transportschichtverbindung an der momentan verwendeten Transportschichtverbindung herzustellen, nachdem das Erweiterungshinweis-Übertragungsmodul den Erweiterungshinweis einer sicheren Übertragung gesendet hat, und die SYSLOG-Nachrichten, die einen Sicherheitsschutz benötigen, über die Verbindung einer sicheren Übertragung zu übertragen.

6. Vorrichtung nach Anspruch 5, ferner umfassend:
ein Wiederherstellungshinweis-Übertragungsmodul, das ausgestaltet ist, um einen Wiederherstellungshinweis einer sicheren Übertragung zu übertragen; und
ein SYSLOG-Nachrichten-Transportschich tübertragungsmodul, das ausgestaltet ist, um die SYSLOG-Nachrichten über die Transportschichtverbindung zu übertragen, nachdem das Wiederherstellungshinweis-Übertragungsmodul den Wiederherstellungshinweis einer sicheren Übertragung gesendet hat.

7. Vorrichtung zum Empfangen von SYSLOG-Nachrichten, **dadurch gekennzeichnet, dass** die Vorrichtung umfasst:
ein Erweiterungshinweis-Empfangsmodul, das ausgestaltet ist, um einen Erweiterungshinweis einer sicheren Übertragung zu empfangen, wenn SYSLOG-Nachrichten, die einen Sicherheitsschutz benötigen, zu übertragen sind und momentan eine Transportschichtverbindung verwendet wird; und
ein SYSLOG-Nachrichten-Sicherheitsempfangsmodul, das ausgestaltet ist, um eine Verbindung einer sicheren Übertragung herzustellen, ohne die Transportschichtverbindung zu schließen, nachdem das Erweiterungsinformations-Empfangsmodul den Hinweis einer sicheren Übertragung empfangen hat, und SYSLOG-Nachrichten, die einen Sicherheitsschutz benötigen, über die Verbindung einer sicheren Übertragung zu empfangen.

8. Vorrichtung nach Anspruch 7, ferner umfassend:
ein Wiederherstellungshinweis-Empfangsmodul, das ausgestaltet ist, um einen Wiederherstellungshinweis einer sicheren Übertragung zu empfangen; und
ein SYSLOG-Nachrichten-Transportschichtempfangsmodul, das ausgestaltet ist, um die SYSLOG-Nachrichten über die Transportschichtverbindung zu empfangen, nachdem das Wiederherstellungshinweis-Empfangsmodul den Wiederherstellungshinweis einer sicheren Übertragung empfangen hat.

9. System zum Übertragen von SYSLOG-Nachrichten unter Verwendung einer Vorrichtung nach Anspruch 5 oder 6.

10. System nach Anspruch 9, ferner umfassend:
eine Vorrichtung nach Anspruch 7 oder 8.

11. System zum Übertragen von SYSLOG-Nachrichten unter Verwendung einer Vorrichtung nach Anspruch 7 oder 8.

## Revendications

1. Procédé de transmission de messages d'historique du système (SYSLOG pour "SYStem LOG"), comprenant :
la transmission de messages SYSLOG d'un émetteur de messages SYSLOG à un récepteur de messages SYSLOG via une connexion par couche de transport ; et
**caractérisé en ce que** le procédé comprend en outre :
la transmission, de l'émetteur de messages SYSLOG au récepteur de messages SYSLOG, d'une indication de mise à niveau de transmission en sécurité lorsque des messages SYSLOG qui nécessitent une protection de sécurité doivent être transmis et que la connexion par couche de transport est en cours d'utilisation ;
l'établissement, entre l'émetteur de messages SYSLOG et le récepteur de messages SYSLOG, d'une connexion de transmission en sécurité sur la connexion par couche de transport en cours d'utilisation pour transmettre les messages SYSLOG qui nécessitent une protection de sécurité sans fermer la connexion par couche de transport ; et
la transmission, de l'émetteur de messages SYSLOG au récepteur de messages SYSLOG via la connexion de transmission en sécurité, des messages SYSLOG qui nécessitent une protection de sécurité.

2. Procédé selon la revendication 1, comprenant en outre :
la transmission, de l'émetteur de messages SYSLOG au récepteur de messages SYSLOG, d'une indication de reprise en arrière de transmission en sécurité ; et
la transmission à nouveau de messages SYSLOG de l'émetteur de messages SYSLOG au récepteur de messages via la connexion par couche de transport.

3. Procédé selon la revendication 2, comprenant en outre :
le maintien de la connexion de transmission en sécurité entre l'émetteur de messages SYSLOG et le récepteur de messages SYSLOG ; et
la transmission de messages SYSLOG qui nécessitent une protection de sécurité de l'émetteur de messages SYSLOG au récepteur de messages SYSLOG via la connexion de transmission en sécurité lorsqu'une autre indication de mise à niveau de transmission en sécurité est envoyée de l'émetteur de messages SYSLOG au récepteur de messages SYSLOG.

4. Procédé selon la revendication 2, comprenant en outre :
la fermeture de la connexion de transmission en sécurité entre l'émetteur de messages SYSLOG et le récepteur de messages SYSLOG ;
l'établissement d'une nouvelle connexion de transmission en sécurité sur la connexion par couche de transport en cours d'utilisation lorsqu'une autre indication de mise à niveau de transmission en sécurité est envoyée de l'émetteur de messages SYSLOG au récepteur de messages SYSLOG ; et
la transmission, de l'émetteur de messages SYSLOG au récepteur de messages SYSLOG via la nouvelle connexion de transmission en sécurité, de messages SYSLOG qui nécessitent une protection de sécurité.

5. Appareil pour émettre des messages SYSLOG, **caractérisé en ce que** l'appareil comprend :
un module d'émission d'indication de mise à niveau, constitué pour émettre une indication de mise à niveau de transmission en sécurité lorsque des messages SYSLOG qui nécessitent une protection de sécurité doivent être transmis et qu'une connexion par couche de transport est en cours d'utilisation ; et
un module d'émission en sécurité de messages SYSLOG, constitué pour établir une connexion de transmission en sécurité sans fermer la connexion par couche de transport sur la connexion par couche de transport en cours d'utilisation après que le module d'émission d'indication de mise à niveau a envoyé l'indication de mise à niveau de transmission en sécurité, et pour émettre les messages SYSLOG qui nécessitent une protection de sécurité via la connexion de transmission en sécurité.

6. Appareil selon la revendication 5, comprenant en outre :
un module d'émission d'indication de reprise en arrière, constitué pour émettre une indication de reprise en arrière de transmission en sécurité ; et
un module d'émission par couche de transport de messages SYSLOG, constitué pour émettre les messages SYSLOG via la connexion par couche de transport après que le module d'émission d'indication de reprise en arrière a envoyé l'indication de reprise en arrière de transmission en sécurité.

7. Appareil pour recevoir des messages SYSLOG, **caractérisé en ce que** l'appareil comprend :
un module de réception d'indication de mise à niveau, constitué pour recevoir une indication de mise à niveau de transmission en sécurité lorsque des messages SYSLOG qui nécessitent une protection de sécurité doivent être transmis et qu'une connexion par couche de transport est en cours d'utilisation ; et
un module de réception en sécurité de messages SYSLOG, constitué pour établir une connexion de transmission en sécurité sans fermer la connexion par couche de transport après que le module de réception d'indication de mise à niveau a reçu l'indication de transmission en sécurité, et pour recevoir les messages SYSLOG qui nécessitent une protection de sécurité via la connexion de transmission en sécurité.

8. Appareil selon la revendication 7, comprenant en outre :
un module de réception d'indication de reprise en arrière, constitué pour recevoir une indication de reprise en arrière de transmission en sécurité ; et
un module de réception par couche de transport de messages SYSLOG, constitué pour recevoir les messages SYSLOG via la connexion par couche de transport après que le module de réception d'indication de reprise en arrière a reçu l'indication de reprise en arrière de transmission en sécurité.

9. Système de transmission de messages SYSLOG utilisant un appareil selon la revendication 5 ou 6.

10. Système selon la revendication 9, comprenant en outre un appareil selon la revendication 7 ou 8.

11. Système de transmission de messages SYSLOG utilisant un appareil selon la revendication 7 ou 8.
